(19) Europäisches Patentamt European Patent Office Office européen des brevets

(11) **EP 4 530 694 A2**

(12) **EUROPEAN PATENT APPLICATION**

(43) Date of publication:
**02.04.2025   Bulletin 2025/14**

(21) Application number: 24222842.7

(22) Date of filing: **23.12.2024**

(51) International Patent Classification (IPC):
*G02B 13/00* (2006.01)

(52) Cooperative Patent Classification (CPC):
**G02B 13/0045; G02B 13/0065**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **29.12.2023   CN 202311850945**

(71) Applicant: **Jiangxi OFILM Optical Co., Ltd.
Nanchang, Jiangxi 330096 (CN)**

(72) Inventor: **LIU, Binbin
Shenzhen, 518106 (CN)**

(74) Representative: **Zaboliene, Reda
Metida
Business center Vertas
Gyneju str. 16
01109 Vilnius (LT)**

(54)   **OPTICAL SYSTEM, LENS MODULE, AND ELECTRONIC DEVICE**

(57)    An optical system sequentially includes a first lens, a second lens, a third lens, a fourth lens, and a fifth lens. The first lens has negative refractive power. The second lens has positive refractive power. The third lens has refractive power. The fourth lens has positive and negative refractive power. The fifth lens has refractive power. Object side surfaces of the first, second, fourth, and fifth lenes are convex, and image side surfaces of the first, second, fourth, and fifth lenes are concave. An object side surface of the third lens is concave, and an image side surface of the third lens is convex. The first to fourth lenses constitute a movable lens group, and the fourth lens is a fixed lens group. The fixed lens group is fixed relative to an imaging plane, and the movable lens group is movable along the optical axis.

FIG. 1A

EP 4 530 694 A2

**Description**

FIELD

The subject matter relates to field of optical imaging, and more particularly, to an optical system, a lens module, and an electronic device.

BACKGROUND

With the development of technology, especially the rapid development of optical systems, the optical systems are widely used in smart devices such as mobile phones and tablet personal computers, and people's demand on compact design of lenses is higher and higher. A traditional focusing method is generally implemented by moving the entire lens by a focus motor, such that an imaging plane of the lens can coincide with a photosensitive surface of the photosensitive chip. Therefore, a large space (mechanical back focus) needs to be reserved between the lens and the photosensitive chip, which is not conducive to the compact design of a lens module. Moreover, moving the entire lens requires a lot of power from the focus motor, which results in a larger focus motor. It is not conducive to the compact design of the lens module and will cause a focusing speed to decrease. Therefore, it is urgent to design an optical system to solve the above problems.

SUMMARY

An object of the present application is to provide an optical system, a lens module, and an electronic device, and the optical system has a movable focusing function and a characteristic of miniaturization.
In order to achieve the object of the present application, the present application provides the following technical solutions:
In a first aspect, the present application provides an optical system. The optical system consists of five lenses having refractive power. The five lenses sequentially include a first lens, a second lens, a third lens, a fourth lens, and a fifth lens from an object side to an image side along an optical axis. The first lens has negative refractive power, an object side surface of the first lens is convex near the optical axis, and an image side surface of the first lens is concave near the optical axis. The second lens has positive refractive power, an object side surface of the second lens is convex near the optical axis, and an image side surface of the second lens is concave near the optical axis. The third lens has refractive power, an object side surface of the third lens is concave near the optical axis, and an image side surface of the third lens is convex near the optical axis. The fourth lens has positive and negative refractive power, an object side surface of the fourth lens is convex near the optical axis, and an image side surface of the fourth lens is concave near the optical axis. The fifth lens has refractive power, an object side surface of the fifth lens is convex near the optical axis, and an image side surface of the fifth lens is concave near the optical axis. The first lens, the second lens, the third lens, and the fourth lens constitute a movable lens group, and the fifth lens is a fixed lens group. The fixed lens group is fixed relative to an imaging plane of the optical system, and the movable lens group is movable between a wide-angle end and a telephoto end along the optical axis to perform focusing. The optical system satisfies at least one of following conditions: 20°<FOV<40°, 1.4<FNO<3.2, and 2.5<TDmax/ImgH<4.5. Whereinin FOV is a maximum field of view of the optical system, FNO is a F-number of the optical system, TDmax is a maximum distance from the object side surface of the first lens to the image side surface of the fifth lens along the optical axis, and ImgH is a half of an image height corresponding to a maximum field of view of the optical system.
The movable lens group moves between the fixed lens group and the imaging plane to perform focusing, such that the optical system can have the movable focusing function, and the requirement of compact design of the optical system can be satisfied. Moreover, focusing is performed only by moving the movable lens group, which can further reduce the burden of the optical system on the motor, such that the effect of fast focusing of the optical system can be achieved by using a lower-power motor. Using five lenses with refractive power can evenly distribute the pressure of light refraction to each lens, thereby reducing the amount of light refracted by a single lens, preventing the lens from being too curved, and thus avoiding increasing tolerance sensitivity. Also, the number of lenses in the movable lens group is set to four, such that the optical system can reduce the burden of the lens on the motor while ensuring clear imaging, power from the motor during focusing can be lower, and an effect of fast focusing can be achieved. The distribution of refractive power is properly set, which is favorable for balancing aberrations and improving the imaging quality of the optical system. The proper distribution of refractive power cooperates with a proper surface design, the lenses may be better adapted to each other, which may utilize the space reasonably and allow the light to gently travel, thereby effectively reducing the introduction of aberrations and improving the imaging quality.
When the above conditions are satisfied, overall parameters of the optical system are properly set, and both axial and radial dimensions satisfy the requirement of compact design, which reduces the space occupied by a lens body, thereby providing sufficient movement space for the rear module focusing.
In a second aspect, the present application further provides a lens module. The lens module includes the optical system mentioned in any one of embodiments of the first aspect and a photosensitive chip, and the photosensitive chip is located on an image side of the optical system. By adding the optical system provided by the present application to the lens module, and by reasonably designing a surface shape and refractive power of each lens in the optical system and fixing the total optical length, the lens module can have the movable focusing function and the characteristic of miniaturization.

In a third aspect, the present application further provides an electronic device. The electronic device includes a housing and the lens module mentioned in the second aspect, and the lens module is located in the housing. By adding the lens module provided by the present application to the electronic device, the electronic device can have the movable focusing function, thereby obtaining a faster focusing speed. The compact design of the lens module can also save more space for installing other components.

BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1A is a schematic diagram of an optical system according to a first embodiment when a movable lens group is located at a telephoto end.
FIG. 1B is a graph showing various aberrations of the optical system according to the first embodiment when the movable lens group is located at the telephoto end.
FIG. 1C is a schematic diagram of the optical system according to the first embodiment when the movable lens group is located at a wide-angle end.
FIG. 1D is a graph showing various aberrations of the optical system according to the first embodiment when the movable lens group is located at the wide-angle end.
FIG. 2A is a schematic diagram of an optical system according to a second embodiment when a movable lens group is located at a telephoto end.
FIG. 2B is a graph showing various aberrations of the optical system according to the second embodiment when the movable lens group is located at the telephoto end.
FIG. 3A is a schematic diagram of an optical system according to a third embodiment when a movable lens group is located at a telephoto end.
FIG. 3B is a graph showing various aberrations of the optical system according to the third embodiment when the movable lens group is located at the telephoto end.
FIG. 4A is a schematic diagram of an optical system according to a fourth embodiment when a movable lens group is located at a telephoto end.
FIG. 4B is a graph showing various aberrations of the optical system according to the fourth embodiment when the movable lens group is located at the telephoto end.
FIG. 5A is a schematic diagram of an optical system according to a fifth embodiment when a movable lens group is located at a telephoto end.
FIG. 5B is a graph showing various aberrations of the optical system according to the fifth embodiment when the movable lens group is located at the telephoto end.
FIG. 6 is a schematic diagram of a lens module according to an embodiment the present application.
FIG. 7 is a schematic diagram of an electronic device according to an embodiment of the present application.

DETAILED DESCRIPTION

Implementations of the present disclosure will now be described, by way of embodiments, with reference to the above figures. The embodiments are obviously a portion but not all of the embodiments of the present application. Based on the embodiments of the present application, other embodiments obtained by ordinary skill in the art without creative work will still fall within the scope of protection of the present application.

In a first aspect, the present application provides an optical system. The optical system consists of five lenses having refractive power. The five lenses sequentially include a first lens, a second lens, a third lens, a fourth lens, and a fifth lens from an object side to an image side along an optical axis. The first lens has negative refractive power, an object side surface of the first lens is convex near the optical axis, and an image side surface of the first lens is concave near the optical axis, such that light with a wide-angle may enter the optical system, rapid convergence of the light may be avoided when the light exits the first lens, and an incident angle of light at the first lens may be reduced. The second lens has positive refractive power, an object side surface of the second lens is convex near the optical axis, and an image side surface of the second lens is concave near the optical axis, such that the second lens may match the surface shape of the first lens to balance aberrations generated by the first lens. The third lens has refractive power, an object side surface of the third lens is concave near the optical axis, and an image side surface of the third lens is convex near the optical axis, such that the third lens may adjust the deflection angle of the light to allow the light between the third lens and the fourth lens to gently travel, thereby achieving movable focusing. The fourth lens has positive and negative refractive power, and an object side surface of the fourth lens is convex near the optical axis, such that the Petzval number may be adjusted to reduce astigmatism and field curvature. The fifth lens has refractive power, which is favorable for correcting aberrations and the deflection angle of off-axis light, thereby improving overall imaging quality. The first lens, the second lens, the third lens, and the fourth lens constitute a movable lens group, and the fifth lens is a fixed lens group. The fixed lens group is fixed relative to an imaging plane of the optical system, and the movable lens group is movable along the optical axis.

The present application utilizes the movable lens group to move between the fixed lens group and the imaging plane, such that the optical system can have the movable focusing function, and the requirement of compact design of the optical system can be satisfied. Moreover, focusing is performed only by moving the movable lens group, which can further reduce the burden of the optical system on the motor, such that the effect of fast focusing of the optical system can be achieved by using a lower-power motor. Using five lenses with refractive power can evenly distribute the pressure of light refraction to each lens, thereby reducing the amount of light refracted by a single lens, preventing the lens from being too curved, and thus avoiding increasing tolerance sensitivity. Also, the number of lenses in the movable lens group is set to four, such that the optical system can reduce the burden of the lens on the motor while ensuring clear imaging, power from the motor during focusing can be lower, and an effect of fast focusing can be achieved. The distribution of refractive power is properly set, which is favorable for balancing aberrations and improving the imaging quality of the optical system. The proper distribution of refractive power cooperates with a proper surface design, the lenses may be better adapted to each other, which may utilize the space reasonably and allow the light to gently travel, thereby effectively reducing the introduction of aberrations and improving the imaging quality.

In some embodiments, the optical system satisfies the condition of $15° < FOV < 45°$. Wherein, is a maximum field of view of the optical system. When the above condition is satisfied, the optical system can have a reasonable imaging range, which is conductive to the design of long-distance imaging. Furthermore, the optical system satisfies the condition of $15° < FOV < 40°$, such that the imaging quality of the optical system may be better.

In some embodiments, the optical system satisfies the condition of $1.4 < FNO < 3.2$. Wherein, FNO is a F-number of the optical system. When the above condition is satisfied, the F-number can be appropriate, which is conducive to miniaturization design in the radial direction and helps to increase the amount of incoming light. Furthermore, the optical system satisfies the condition of $1.6 < FNO < 3$, such that the imaging quality of the optical system may be better.

In some embodiments, the optical system satisfies the condition of $2.5 < TDmax/ImgH < 4.5$. Wherein TDmax is a maximum distance from the object side surface of the first lens to the image side surface of the fifth lens along the optical axis, and ImgH is a half of an image height corresponding to a maximum field of view of the optical system. When the above condition is satisfied, the axial dimension of the optical system can meet the requirements of miniaturization design. Furthermore, the optical system satisfies the condition of $3 < TDmax/ImgH < 4$, such that the imaging quality of the optical system may be better.

In some embodiments, the optical system includes a prism, and the prism is disposed on the object side of the first lens and is fixed relative to the imaging plane of the optical system. The prism includes an incident surface and an exit surface, and light enters the prism from the incident surface and is transmitted from the exit surface to the first lens. The above technical features are met, the movable lens group moves between the prism and the fixed lens group, and the total length of the optical system does not change, that is, the optical system can achieve the characteristics of internal focusing, which can reduce the redundant space of focusing and help shorten the total length of the optical system.

In some embodiments, the optical system satisfies the condition of $5 < TTL/ImgH < 9$. Wherein TTL is a distance from the incident surface to the imaging plane along the optical axis. When the above condition is satisfied, the optical system can meet the miniaturization design. Furthermore, the condition of $6 < TTL/ImgH < 8$ is satisfied, such that the miniaturization design effect may be better.

In some embodiments, the optical system satisfies the condition of $0.7 < f\_z1/f\_z2 < 1.4$. Wherein $f\_z1$ is a focal length of the optical system when the movable lens group is located at the telephoto end, and $f\_z2$ is a focal length of the optical system when the movable lens group is located at the wide-angle end. When the above condition is satisfied, the focal length cannot change too much during a movement focus process, thereby avoiding excessive aberrations that affect the imaging quality. Furthermore, the condition of $0.9 < f\_z1/f\_z2 < 1.2$ is satisfied, such that the imaging quality of the optical system may be better.

In some embodiments, the optical system satisfies the condition of $1.05 < FOV\_z1/FOV\_z2 < 1.4$. Wherein FOV_z1 is the maximum field of view of the optical system when the movable lens group is located at the telephoto end, and FOV_z2 is the maximum field of view of the optical system when the movable lens group is located at the wide-angle end. When the above condition is satisfied, the field of view cannot change too much during the movement focus process, which can ensure that the imaging quality of the edge field of view remains stable. Furthermore, the condition of $1.05 < FOV\_z1/FOV\_z2 < 1.2$ is satisfied, such that the imaging quality of the optical system may be better.

In some embodiments, the optical system satisfies the condition of $1 < FNO\_z1/FNO\_z2 < 1.4$. Wherein FNO_z1 is the F-number of the optical system when the movable lens group is located at the telephoto end, and FNO_z2 is the F-number of the optical system when the movable lens group is located at the wide-angle end. When the above condition is satisfied, the aperture cannot change too drastically, which can avoid significant blurring and help to improve imaging quality and imaging stability. Furthermore, the condition of 1.05<FNO_z1/FNO_z2<1.2 is satisfied, such that the imaging quality of the optical system may be better.

In some embodiments, the optical system satisfies the condition of 0.5<f1234/f_z1<1.4. Wherein f1234 is a combined focal length of the first lens, the second lens, the third lens, and the fourth lens. When the above condition is satisfied, the refractive power of the movable lens group can be moderate, the resolution pressure of the fixed lens group can be moderate, and the image quality can be stable during the movement focus process. Furthermore, the condition of 0.7<f1234/f_z1<1.2 is satisfied, such that the imaging quality of the optical system may be better.

In some embodiments, the optical system satisfies the condition of 1<|f5|/f1234. Wherein f5 is the focal length of the fifth lens. When the above condition is satisfied, the refractive power of the movable lens group can be adapted to the refractive power of the fixed lens group, which can effectively balance the aberration and improve the imaging quality. Furthermore, the condition of 1.7<|f5|/f1234 is satisfied, such that the imaging quality of the optical system may be better.

In some embodiments, the optical system satisfies the condition of 2<TDmin/ImgH<4. Wherein TDmin is a minimum distance from the object side surface of the first lens to the image side surface of the fifth lens along the optical axis. When the above condition is satisfied, the length of the optical system can be small, which can meet the concept of miniaturization design. Furthermore, the condition of 2.5<TDmin/ImgH<3.5 is satisfied, such that the miniaturization effect of the optical system may be better.

In some embodiments, the optical system satisfies the condition of 0.7<SD10/SD1<1.4, SD1 is an effective aperture radius of the object side surface of the first lens, and SD10 is an effective aperture radius of the image side surface of the fifth lens. When the above condition is satisfied, the radial dimensions of all lenses of the optical system can be adapted to each other, which is conducive to periscope design and is beneficial to improving the overall space utilization. Furthermore, the condition of 0.8<SD10/SD1<1.3 is satisfied, such that the miniaturization design effect of the optical system may be better.

In some embodiments, the optical system satisfies the condition of 0.75<SDmaac/ImgH<1.2. Wherein SDmax is a maximum value of effective aperture radiuses of object side surfaces or image side surfaces of the first to fifth lenses. When the above condition is satisfied, the radial size of the optical system can match the imaging plane, thereby satisfying the radial miniaturization design effect of the optical system. Furthermore, the condition of 0.85<SDmax/ImgH<1.1 is satisfied, such that the miniaturization design effect of the optical system may be better.

In some embodiments, the optical system satisfies the condition of 1<TDmax/TDmin<1.5. Wherein TDmin is a minimum distance from the object side surface of the first lens to the image side surface of the fifth lens along the optical axis. When the above condition is satisfied, sufficient movement space can be provided for the movable lens group, which can improve the focusing ability of the optical system. Furthermore, the condition of 1.1<TDmax/TDmin<1.3 is satisfied, such that the imaging quality of the optical system may be better.

In some embodiments, the optical system satisfies the condition of 0.6<TD_z1/f_z1<1.05, TD_z1 is a distance from the object side surface of the first lens to the image side surface of the fifth lens along the optical axis when the movable lens group is located at the telephoto end, and TD_z2 is a distance from the object side surface of the first lens to the image side surface of the fifth lens along the optical axis when the movable lens group is located at the wide-angle end. When the above condition is satisfied, the optical system can satisfy the telephoto characteristic, which is helpful for long-distance imaging. Furthermore, the condition of 0.65<TD_z1/f_z1<1 is satisfied, such that the telephoto characteristic of the optical system may be better.

In some embodiments, the optical system satisfies the condition of 0.75<TD_z2/f_z2<1.2. When the above condition is satisfied, the optical system can have the telephoto characteristic, which is helpful for long-distance imaging. Furthermore, the condition of 0.8<TD_z2/f_z2<1.15 is satisfied, such that the optical system may have better imaging quality.

In some embodiments, the optical system satisfies the condition of 1.7<AT23/AT12<3.5, AT12 is a distance between the first lens and the second lens on the optical axis, and AT23 is a distance between the second lens and the third lens on the optical axis. When the above condition is satisfied, the lenses of the movable lens group can be reasonably distributed, which is conducive to improving space utilization, balancing aberrations, and improving imaging quality. Furthermore, the condition of 2<AT23/AT12<3 is satisfied, such that the imaging quality of the optical system may be better.

In some embodiments, the optical system satisfies the condition of 1<Cz2/Cz1<5, Cz1 is a distance between the fourth lens and the fifth lens on the optical axis when the movable lens group is located at the telephoto end, and Cz2 is a distance between the fourth lens and the fifth lens on the optical axis when the movable lens group is located at the wide-angle end. When the above condition is satisfied, sufficient space is provided for the movable lens group, which can improve the focusing ability of the optical system. Furthermore, the condition of 1.2<Cz2/Cz1<4 is satisfied, such that the imaging quality of the optical system may be better.

In some embodiments, the optical system satisfies the conditions of 4<GL/CT5<8, 0.5<CT1/CT2<1.5, 0.5<CT3/CT4<1.4, 0.5<CT5/CT4<1.3, 0.7<CT2/CT3<2.3, CT1 is a thickness of the first lens on the optical axis, CT2 is a thickness of the second lens on the optical axis, CT3 is a thickness of the third lens on the optical axis, CT4 is a thickness of the fourth lens on the optical axis, CT5 is a thickness of the fifth lens on the optical axis, and GL is a distance from the object side surface of the first lens to the image side surface of the fourth lens along the optical axis. When the above conditions, sizes of the lenses are reasonably distributed, which is favorable for improving the space utilization of the optical system, facilitates the coordination between lenses, and is favorable for balancing aberrations and improving imaging quality. Furthermore, the conditions of 5<GL2CT5<7, 0.65<CT1/CT2<1.3, 0.65<CT3/CT4<1.2, 0.65<CT5/CT4<1, 0.8<CT2/CT3<1.9 are satisfied, the imaging quality of the optical system may be better.

In some embodiments, the optical system satisfies the conditions of -2.5<F1/f_z1<-0.8, 0.4<f2/f_z1<1.1, 2<| f3|/f_z1, 0.7<f4/f_z1<2.2, 1<|F5|/f_z1, f1 is a focal length of the first lens, f2 is a focal length of the second lens, f3 is a focal length of the third lens, f4 is a focal length of the fourth lens, and f5 is a focal length of the fifth lens. When the above conditions are satisfied, the refractive power of each lens of the optical system may be reasonably distributed, thereby improving the imaging quality of the optical system. Furthermore, the conditions of - 2.2<f1/f_z1<-0.9, 0.45<f2/f_z1<1, 2.5<|f3|/f_z1, 0.9<f4/f_z1<1.95, 1.2<|F5|/f_z1 are satisfied, the imaging quality of the optical system may be better.

In some embodiments, the optical system satisfies the conditions of 0.2<R1/f_z1<0.7, 0.1<R2/f_z1<0.4, 0.15<R3/f_z1<0.5, 0.7<R4/f_z1<2.2, -0.5<R5/f_z1<-0.1, -0.5<R6/f_z1<-0.1, 0.1<R7/f_z1<0.5, 0.15<R8/f_z1<0.6, 0.5<R9/f_z1<2.5, 0.4<R10/f_z1<1.4, R1 is a curvature radius of the object side surface of the first lens at the optical axis, R2 is a curvature radius of the image side surface of the first lens at the optical axis, R3 is a curvature radius of the object side surface of the second lens at the optical axis, R4 is a curvature radius of the image side surface of the second lens at the optical axis, R5 is a curvature radius of the object side surface of the third lens at the optical axis, R6 is a curvature radius of the image side surface of the third lens at the optical axis, R7 is a curvature radius of the object side surface of the fourth lens at the optical axis, R8 is a curvature radius of the image side surface of the fourth lens at the optical axis, R9 is a curvature radius of the object side surface of the fifth lens at the optical axis, and R10 is a curvature radius of the image side surface of the fifth lens at the optical axis. When the above conditions are satisfied, the surface shapes of the lenses may be reasonably set and may cooperate with each other, which is favorable for balancing the aberration, thereby improving the imaging quality.

Furthermore, the conditions of 0.25<R1/f_z1<0.5, 0.15<R2/f_z1<0.3, 0.2<R3/f_z1<0.4, 0.85<R4/f_z1<1.9, -0.35<R5/f_z1<-0.15, -0.35<R6/f_z1<-0.2, 0.15<R7/f_z1<0.35, 0.2<R8/f_z1<0.45, 0.6<R9/f_z1<2, and 0.45<R10/f_z1<1.2 are satisfied, the imaging quality of the optical system may be better.

Each of the aforementioned features of the optical system can be utilized in various combinations for achieving the corresponding effects.

In one embodiment, the lenses thereof can be made of glass or plastic materials. When the lenses are made of glass materials, the distribution of the refractive power of the lenses in the optical system may be more flexible to design. The glass lens can either be made by grinding or molding. When the lenses are made of plastic materials, manufacturing costs can be effectively reduced. Further, surfaces of each lens can be arranged to be aspheric (ASP), since the aspheric surface of the lens is easy to form a shape other than a spherical surface so as to have more controllable variables for eliminating aberrations thereof, and to further decrease the required amount of lenses in the optical system. Therefore, the total track length of the optical system can also be reduced. The aspheric surfaces may be formed by a plastic injection molding method, a glass molding method or other manufacturing methods.

In one embodiment, additives can be selectively added into any one (or more) material of the lenses so as to change the transmittance of the lens element in a particular wavelength range. In one embodiment, when a surface of the lens is aspheric, it indicates that entire optical effective region of the surface of the lens or a part thereof is aspheric.

In one embodiment, when the lenses have surfaces being convex and the convex surface position is not defined, it indicates that the aforementioned surfaces of the lens elements can be convex in the paraxial region thereof. When the lenses have surfaces being concave and the concave surface position is not been defined, it indicates that the aforementioned surfaces of the lenses can be concave in the paraxial region thereof. In the optical system of the present application, if the lens has positive refractive power or negative refractive power, or the focal length of the lens, all can be referred to the refractive power, or the focal length, in the paraxial region of the lens. In one embodiment, a critical point is a non-axial point of the lens surface where its tangent is perpendicular to the optical axis, and an inflection point is a point on a lens surface with a curvature changing from positive to negative or from negative to positive.

In one embodiment, at least one element with light path folding function can be selectively disposed between an imaged object and the imaging plane, such as a prism or a mirror, etc. Therefore, it is favorable for providing high flexible space arrangement of the optical system, such that the compactness of an electronic device would not be restricted by the optical total track length of the optical system. In one embodiment, the optical system may also be selectively disposed with three or more light path folding elements, the type, amount and location of the light path folding element will not be limited to the present application.

In one embodiment, the optical system of the present application can be applied to 3D (three-dimensional) image capturing applications, in products such as digital cameras, mobile devices, digital tablets, smart TVs, surveillance systems, motion sensing input devices, driving recording systems, rearview camera systems, wearable devices, unmanned aerial vehicles, and other electronic imaging products.

In a second aspect, the present application further provides a lens module, the lens module includes the optical system of any one embodiment of the first aspect and a photosensitive chip, and the photosensitive chip is located on the image side of the optical system. By adding the optical system provided by the present application to the lens module, and by reasonably designing a surface shape and refractive power of each lens in the optical system, the lens module can have the movable focusing function and the characteristic of miniaturization. In one embodiment, the lens module further includes a barrel member, a holder member or a combination thereof.

In a third aspect, the present application further provides an electronic device. The electronic device includes a housing and the lens module mentioned in the second aspect, and the lens module is located in the housing. By adding the lens module provided by the present application to the electronic device, the electronic device can have the movable focusing function, thereby obtaining a faster focusing response speed. Compact design of the lens module design can also save more space for installing other devices. In one embodiment, the electronic device may further include a control unit, a display unit, a storage unit, a temporary storage unit or a combination thereof.

First embodiment

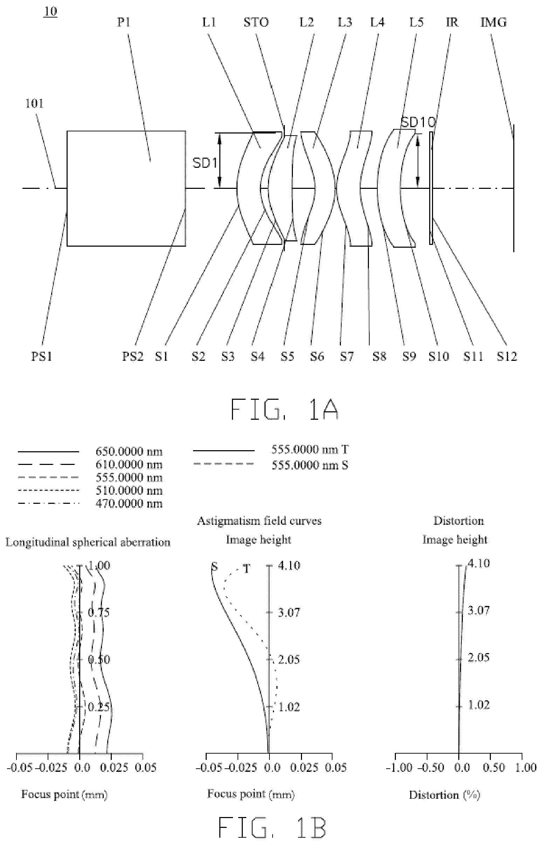

Referring to FIGS. 1A to 1D, an optical system 10 of the first embodiment sequentially includes a first lens L1, a second lens L2, a third lens L3, a fourth lens L4, and a fifth lens L5 from an object side to an image side.

The first lens L1 has negative refractive power, an object side surface S1 of the first lens is convex near the optical axis, and an image side surface S2 of the first lens is concave near the optical axis.

The second lens L2 has positive refractive power, an object side surface S3 of the second lens is convex near the optical axis, and an image side surface S4 of the second lens is concave near the optical axis.

The third lens L3 has negative refractive power, an object side surface S5 of the third lens is concave near the optical axis, and an image side surface S6 of the third lens is convex near the optical axis.

The fourth lens L4 has positive and negative refractive power, an object side surface S7 of the fourth lens is convex near the optical axis, and an image side surface S8 of the fourth lens is concave near the optical axis.

The fifth lens L5 has positive refractive power, an object side surface S9 of the fifth lens is convex near the optical axis, and an image side surface S10 of the fifth lens is concave near the optical axis.

Moreover, the optical system 10 also includes an aperture stop STO, an optical filter IR, and an imaging plane IMG. In this embodiment, the aperture stop STO is arranged between the first lens L1 and the second lens L2. In other embodiments, the aperture stop STO can also be arranged between other two lenses, for example, the aperture stop STO is arranged between the second lens L2 and the third lens L3, and the aperture stop STO is arranged on the object side of the first lens L1. The optical filter IR can be an infrared cutoff filter or a dual-channel optical filter, which is arranged between the fifth lens L5 and the imaging plane IMG and includes an object side surface S11 and an image side surface S12. The material of the optical filter IR is glass, and a film can be coated on the lens. The materials of the first lens L1 to the fifth lens L5 are plastic. In other embodiments, the materials of lenses can also be glass. The materials of lenses can also be a mixture of glass and plastic, that is, some of the lenses are plastic and the other lenses are glass. An effective pixel area of the photosensitive chip is located on the imaging plane.

The first lens L1, the second lens L2, the third lens L3, and the fourth lens L4 constitute the movable lens group, and the fifth lens constitutes the fixed lens group. The fixed lens group is fixed relative to the imaging plane IMG, and the movable lens group can move along the optical axis to perform focusing.

In this embodiment, the optical system 10 further includes a prism P1, and the prism P1 is located on the object side of the first lens L1 and includes an incident surface PS1 and an exit surface PS2. Light enters the optical system through the incident surface PS1, propagates through the exit surface PS2 to the movable lens group and its subsequent lenses for imaging. The prism P1 is fixed relative to the imaging plane IMG, that is, the total length of the optical system 10 is fixed. The movable lens group moves between the prism P1 and the fixed lens group along the optical axis, thereby achieving internal focusing of the optical system 10. During photographing, when an object distance gradually decreases, the movable lens group moves along the optical axis away from the fixed lens group; when the object distance gradually increases, the movable lens group moves toward the fixed lens group along the optical axis. In other embodiments, when the object distance gradually decreases, the movable lens group moves toward the fixed lens group along the optical axis; when the object distance gradually increases, the movable lens group moves away from the fixed lens group along the optical axis. It should be noted that, under the premise of the same optical path, the prism P1 can be a refracting element, such as a right-angle prism, for changing the propagation direction of the incident light. In other embodiments, the two surfaces of the prism P1 can also be curved surfaces, so that the prism P1 has a refractive power, thereby participating in the imaging. The prism P1 can also be omitted, and the optical system 10 can be regarded as having a scalable characteristic.

Table 1a shows parameters of the optical system 10 of the embodiment. A reference wavelength of the focal length of the lens is 555 nm, and a reference wavelength of the refractive index and Abbe number of the lens is 587.5618 nm. The Y radius in Table 1a is the curvature radius of the object side surface or image side surface with the corresponding surface number on the optical axis 101. The surface numerals S1 and S2 are the object side surface S1 and image side surface S2 of the first lens, respectively. That is, for a same lens, the surface with a smaller surface numeral is the object side surface of the lens, and the surface with a larger surface is the image side surface of the lens. The value in a "thickness" column is a distance from the current surface to the next surface along the optical axis 101. For example, the surface numbered S1 is the object side surface of the first lens L1, and the corresponding "thickness" is a distance from the object side surface S1 of the first lens L1 to the image side surface S2 of the first lens L1, that is, the thickness of the first lens L1. The surface numbered S2 is the image side surface of the first lens L1, and the corresponding "thickness" is the distance from the image side surface S2 of the first lens L1 to the object side surface S3 of the second lens L2, that is, the distance between the first lens L1 and the second lens L2 on the optical axis. The units of the Y radius, thickness, and focal length are mm. Table 1b is the supplementary parameters of Table 1a, which are specifically the upper limit values of the parameters when the movable lens group moves along the optical axis.

Table 1a

| Surface numeral | Lens numeral | Surface type | Y radius (mm) | Thickness (mm) | Material | refractive index | Abbe number | Focal length (mm) |
|---|---|---|---|---|---|---|---|---|
| First embodiment | | | | | | | | |
| | object side | sphere | infinity | A | | | | |
| SP1 | P1 | sphere | infinity | 8.000 | glass | 1.807 | 46.600 | |
| SP2 | | sphere | infinity | B | | | | |
| S1 | L1 | asphere | 5.259 | 1.600 | plastic | 1.670 | 19.200 | -18.070 |
| S2 | | asphere | 3.226 | 1.600 | | | | |
| Aperture stop | STO | sphere | infinity | -1.074 | | | | |
| S3 | L2 | asphere | 4.356 | 1.600 | plastic | 1.544 | 56.000 | 9.491 |
| S4 | | asphere | 23.760 | 1.567 | | | | |
| S5 | L3 | asphere | -3.325 | 1.359 | plastic | 1.544 | 56.000 | -52.510 |
| S6 | | asphere | -4.304 | 0.100 | | | | |
| S7 | L4 | asphere | 3.736 | 1.600 | plastic | 1.544 | 56.000 | 21.154 |
| S8 | | asphere | 4.686 | C | | | | |
| S9 | L5 | asphere | 9.457 | 1.572 | plastic | 1.535 | 55.800 | 147.129 |
| S10 | | asphere | 10.121 | 2.000 | | | | |
| S11 | optical filter IR | sphere | infinity | 0.210 | glass | 1.518 | 64.000 | |
| S12 | | sphere | infinity | 5.495 | | | | |
| IMG | imaging plane | sphere | infinity | 0.001 | | | | |
| Reference wavelength is 587 nm | | | | | | | | |

Table 1b

| | A(mm) | B(mm) | C(mm) | FNO | TTL(mm) | FOV(°) | ImgH(mm) | f(mm) |
|---|---|---|---|---|---|---|---|---|
| telephoto end (z1) | infinity | 3.506 | 1.163 | 1.800 | 30.300 | 32.100 | 4.100 | 14.200 |
| wide-angle end (z2) | 100.000 | 0.700 | 3.969 | 2.100 | 30.300 | 28.000 | 4.100 | 14.450 |

As shown in Table 1a and Table 1b, A is the object distance of the optical system 10 (the distance between the prism P1 and an object on the optical axis), B is the distance between the first lens L1 and the prism P1 on the optical axis, and C is the distance between the fourth lens L4 and the fifth lens L5 on the optical axis, FNO is the F-number of the optical system, f is the focal length of the optical system, FOV is the maximum field of view of the optical system, ImgH is a half of an image height corresponding to the maximum field of view of the optical system, and TTL is the distance from the object side surface of the first lens to the imaging plane IMG of the optical system along the optical axis 101.

In this embodiment, object side surfaces and the image side surfaces of the first lens L1 to the fifth lens L5 are all aspherical surfaces. In other embodiments, the object side surfaces and the image side surfaces of the first lens L1 to the fifth lens L5 may also be spherical surfaces, or a combination of spherical surfaces and aspherical surfaces. For example, the object side surface S1 of the first lens is a spherical surface, and the image side surface S2 is an aspherical surface.

The surface shape x of aspherical surface may be expressed by, but not limited to, the following aspherical formula:

$$x = \frac{ch^2}{1 + \sqrt{1 - (k+1)c^2h^2}} + \sum Aih^i$$

Wherein, x is a distance from a corresponding point of the aspherical surface to a plane tangent to the vertex, h is a distance from any point on the aspherical surface to the optical axis 101, c is a curvature of a vertex of the aspherical surface, k is cone constant, and Ai is a coefficient corresponding to the ith higher-order term in the above aspherical formula. Table 1c shows the coefficients of high-order terms A4, A6, A8, A10, A12, A14, A16, A18, A20, A22, A24, A26, A28, A30 of the aspheric mirrors S1 to S 14 that can be used in the first embodiment.

Table 1c

| First embodiment spherical coefficient | | | | |
|---|---|---|---|---|
| Surface | K | A4 | A6 | A8 | A10 |
| S1 | -1.02827E+00 | -1.06305E-03 | -2.99955E-05 | 3.04461E-06 | -1.48480E-07 |
| S2 | -1.13943E+00 | -3.62171E-03 | 1.75522E-04 | -7.59867E-06 | -2.61341E-07 |
| S3 | -1.61135E+00 | -3.75860E-03 | 3.83459E-04 | -5.82491E-06 | -1.68017E-06 |
| S4 | 0.00000E+00 | -4.13139E-03 | 6.83467E-04 | -2.88002E-05 | -1.60785E-08 |
| S5 | -1.98025E+00 | 7.95573E-03 | -8.30788E-04 | 8.37008E-05 | -5.62269E-06 |
| S6 | -6.70665E-01 | 4.37277E-03 | -3.36029E-04 | 2.04807E-05 | -5.59681E-07 |
| S7 | -1.51614E+00 | -4.52395E-03 | -5.26290E-06 | 9.81694E-06 | -3.96874E-07 |
| S8 | 0.00000E+00 | -5.31358E-03 | -4.57882E-05 | 8.90100E-06 | -4.45845E-07 |
| S9 | 0.00000E+00 | 6.76503E-04 | 1.42926E-06 | 5.83611E-07 | 0.00000E+00 |
| S10 | 0.00000E+00 | 8.99866E-04 | 4.13665E-05 | -3.90029E-06 | 4.04302E-07 |
| Surface numeral | A12 | A14 | A16 | A18 | A20 |
| S1 | 0.00000E+00 | 0.00000E+00 | 0.00000E+00 | 0.00000E+00 | 0.00000E+00 |
| S2 | 1.40779E-08 | 0.00000E+00 | 0.00000E+00 | 0.00000E+00 | 0.00000E+00 |
| S3 | 6.94409E-08 | 0.00000E+00 | 0.00000E+00 | 0.00000E+00 | 0.00000E+00 |
| S4 | 1.16937E-08 | 0.00000E+00 | 0.00000E+00 | 0.00000E+00 | 0.00000E+00 |
| S5 | 2.42014E-07 | -5.69468E-09 | 0.00000E+00 | 0.00000E+00 | 0.00000E+00 |
| S6 | 6.98088E-10 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | -1.82776E-08 | 4.31681E-10 | 0.00000E+00 | 0.00000E+00 | 0.00000E+00 |

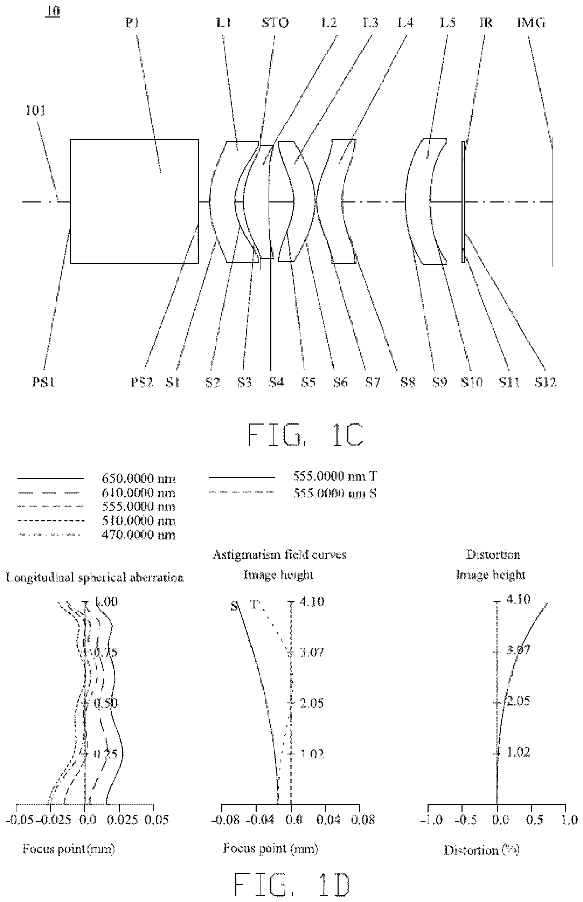

Referring to (a) of FIG. 1B, a longitudinal spherical aberration diagram of the optical system of the first embodiment when the movable lens group is located at the telephoto end is shown. Referring to (a) of FIG. 1D, a longitudinal spherical aberration diagram of the optical system of the first embodiment when the movable lens group is located at the wide-angle end is shown. The reference wavelengths are 650 nm, 610 nm, 555 nm, 510 nm and 470 nm. The horizontal coordinate along X-axis represents deviation of the focus point, and the vertical coordinate along Y-axis represents the normalized field of view. The longitudinal spherical aberration curve shows the deviation of the focal point of light at different wavelengths after passing through each lens of the optical system. From (a) of FIG. 1B, the spherical aberration of the optical system of the first embodiment is good, indicating that the imaging quality of the optical system of this embodiment is good.

Referring to (b) of FIG. 1B, an astigmatism diagram of the optical system of the first embodiment when the movable lens group is located at the telephoto end is shown. Referring to (b) of FIG. 1D, an astigmatism diagram of the optical system of the first embodiment when the movable lens group is located at the wide-angle end is shown. The horizontal coordinate along X-axis represents deviation of the focus point, and the vertical coordinate along Y-axis represents the image height in mm. T of the astigmatism diagram represents the curvature of the imaging plane IMG in the tangential direction, and S represents the curvature of the imaging plane IMG in the sagittal direction. From (b) of FIG. 1B, the astigmatism of the optical system has been compensated.

Referring to (c) of FIG. 1B, a distortion diagram of the optical system of the first embodiment when the movable lens group is located at the telephoto end is shown. Referring to (c) of FIG. 1D, a distortion diagram of the optical system of the first embodiment when the movable lens group is located at the wide-angle end is shown. The horizontal coordinate along X-axis represents the distortion, and the vertical coordinate along Y-axis represents the image height. The distortion curve indicates the distortion value corresponding to different field of view. From (c) of FIG. 1B, the distortion of the optical system has been corrected at the provided wavelength.

It can be seen from (a), (b), (c) in FIG. 1B and (a), (b), (c) in FIG. 1D that the optical system of this embodiment has small aberration and good imaging quality.

To avoid redundancy, the following embodiments only show the schematic diagram and aberration diagram of the optical system when the movable lens group is located at the telephoto end.


Second embodiment

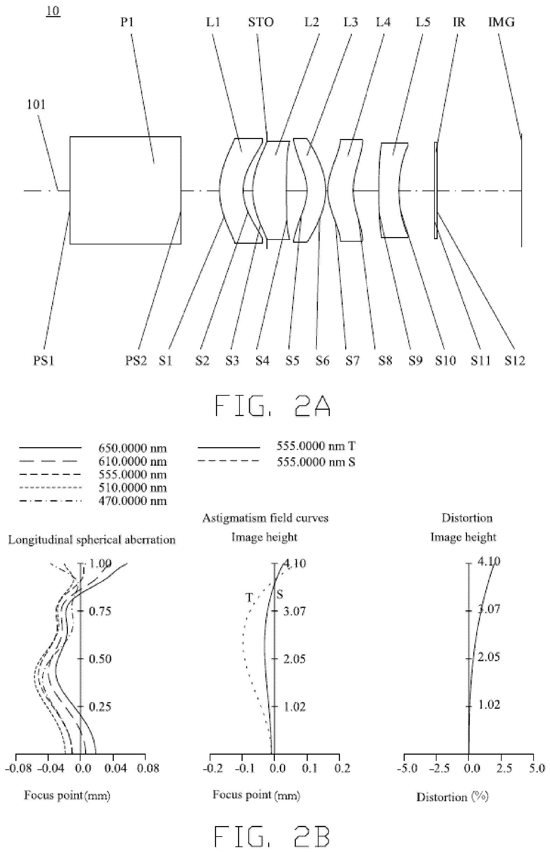

Referring to FIG. 2A to FIG. 2B, the difference between a structure of the second embodiment and a structure of the first embodiment is that the refractive power of the fifth lens L5 is negative. The other of the structure of the second embodiment is referred to the other of the structure of first embodiment.

Table 2a

| Second embodiment | | | | | | | | |
|---|---|---|---|---|---|---|---|---|
| Surface numeral | Lens numeral | Surface tvpe | Y radius (mm) | Thickness (mm) | Material | refractive index | Abbe number | Focal length (mm) |
| | object side | sphere | infinity | A | | | | |
| SP1 | P1 | sphere | infinity | 8.000 | glass | 1.807 | 46.600 | |
| SP2 | | sphere | infinity | B | | | | |
| S1 | L1 | asphere | 5.320 | 1.697 | plastic | 1.670 | 19.200 | -19.017 |
| S2 | | asphere | 3.280 | 1.713 | | | | |
| Aperture stop | STO | sphere | infinity | -1.029 | | | | |
| S3 | L2 | asphere | 4.651 | 2.433 | plastic | 1.544 | 56.000 | 9.551 |
| S4 | | asphere | 35.047 | 1.480 | | | | |
| S5 | L3 | asphere | -3.306 | 1.350 | plastic | 1.544 | 56.000 | -51.244 |
| S6 | | asphere | -4.290 | 0.143 | | | | |
| S7 | L4 | asphere | 3.735 | 1.839 | plastic | 1.544 | 56.000 | 18.227 |
| S8 | | asphere | 4.938 | C | | | | |

(continued)

| Second embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| | object side | sphere | infinity | A | | | | |
| S9 | L5 | asphere | 38.011 | 1.459 | plastic | 1.535 | 55.800 | -24.547 |
| S10 | | asphere | 9.650 | 2.569 | | | | |
| S11 | optical filter IR | sphere | infinity | 0.210 | glass | 1.518 | 64.000 | |
| S12 | | sphere | infinity | 6.064 | | | | |
| IMG | imaging plane | sphere | infinity | 0.001 | | | | |
| Reference wavelength is 587 nm | | | | | | | | |

Table 2b

| | A(mm) | B(mm) | C(mm) | FNO | TTL(mm) | FOV(°) | ImgH(mm) | f(mm) |
|---|---|---|---|---|---|---|---|---|
| telephoto end (z1) | infinity | 2.812 | 1.855 | 2.400 | 32.600 | 23.700 | 4.100 | 19.140 |
| wide-angle end (z2) | 100.000 | 0.700 | 3.969 | 2.800 | 32.600 | 21.500 | 4.100 | 17.150 |

Table 2c shows the coefficients of the higher-order terms that can be used for each aspherical mirror surface in the second embodiment. Wherein each aspherical surface shape can be defined by the formula provided in the first embodiment.

Table 2c

| Second embodiment spherical coefficient | | | | |
|---|---|---|---|---|
| Surface numeral | K | A4 | A6 | A8 | A10 |
|---|---|---|---|---|---|
| S1 | -1.00973E+00 | -1.03549E-03 | -2.65463E-05 | 1.88839E-06 | -7.75697E-08 |
| S2 | -1.14182E+00 | -3.82615E-03 | 2.26553E-04 | -1.19342E-05 | -1.89197E-07 |
| S3 | -1.59750E+00 | -3.72329E-03 | 3.80958E-04 | -5.23379E-06 | -1.76100E-06 |
| S4 | 3.90830E-01 | -4.42864E-03 | 8.01837E-04 | -4.64274E-05 | 1.04500E-06 |
| S5 | -1.99134E+00 | 7.91729E-03 | -7.43940E-04 | 6.46731E-05 | -3.95940E-06 |
| S6 | -6.73000E-01 | 4.30550E-03 | -2.92133E-04 | 1.18496E-05 | 1.85207E-07 |
| S7 | -1.53939E+00 | -4.65629E-03 | 1.53028E-05 | 9.15311E-06 | -4.35258E-07 |
| S8 | -1.96022E-18 | -5.43106E-03 | 6.18833E-06 | 3.87665E-06 | -2.67526E-07 |
| S9 | -1.82406E+01 | 1.31454E-04 | 2.37619E-05 | -4.43376E-07 | 0.00000E+00 |
| S10 | -1.12687E+00 | -4.40850E-05 | 2.27538E-04 | -3.76857E-05 | 4.02166E-06 |
| Surface numeral | A12 | A14 | A16 | A18 | A20 |
| S1 | 0.00000E+00 | 0.00000E+00 | 0.00000E+00 | 0.00000E+00 | 0.00000E+00 |
| S2 | 1.84380E-08 | 0.00000E+00 | 0.00000E+00 | 0.00000E+00 | 0.00000E+00 |
| S3 | 7.28798E-08 | 0.00000E+00 | 0.00000E+00 | 0.00000E+00 | 0.00000E+00 |
| S4 | -8.72929E-09 | 0.00000E+00 | 0.00000E+00 | 0.00000E+00 | 0.00000E+00 |
| S5 | 1.77623E-07 | -4.85477E-09 | 0.00000E+00 | 0.00000E+00 | 0.00000E+00 |
| S6 | -2.19178E-08 | 0.00000E+00 | 0.00000E+00 | 0.00000E+00 | 0.00000E+00 |

(continued)

| Surface numeral | A12 | A14 | A16 | A18 | A20 |
|---|---|---|---|---|---|
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | -2.20194E-07 | 4.76183E-09 | 0.00000E+00 | 0.00000E+00 | 0.00000E+00 |

FIG. 2B is an aberration diagram of the optical system of the second embodiment when the movable lens group is located at the telephoto end. The longitudinal spherical aberration curve shows the deviation of the focal point of light at different wavelengths after passing through each lens of the optical system. T of the astigmatism diagram represents the curvature of the imaging plane IMG in the tangential direction, and S represents the curvature of the imaging plane IMG in the sagittal direction. The distortion curve indicates the distortion value corresponding to different field of view. Referring to aberration diagrams of FIG. 2B, the longitudinal spherical aberration, the curvature of field, and the distortion of the optical system of the second embodiment have been controlled, thus the optical system of this embodiment has good imaging quality.

Third embodiment

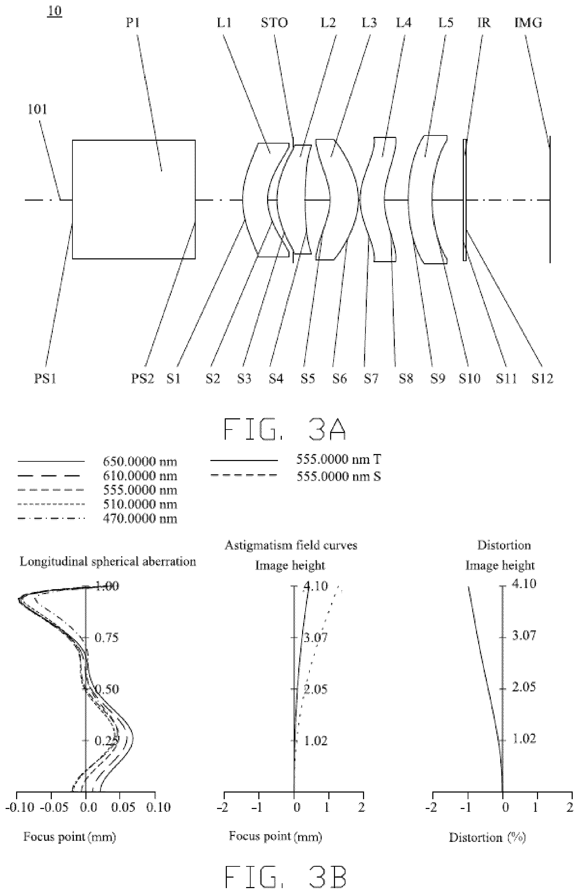

Referring to FIG. 3A to FIG. 3B, the difference between a structure of the third embodiment and a structure of the first embodiment is that the refractive power of the third lens L3 is positive, and the refractive power of the fifth lens L5 is negative. The other of the structure of the third embodiment is referred to the other of the structure of first embodiment.

Table 3a

| | | | | Third embodiment | | | | |
|---|---|---|---|---|---|---|---|---|
| Surface numeral | Lens numeral | Surface type | Y radius (mm) | Thickness (mm) | Material | refractive index | Abbe number | Focal length (mm) |
| | object side | sphere | infinity | A | | | | |
| SP1 | P1 | sphere | infinity | 8.000 | glass | 1.807 | 46.600 | |
| SP2 | | sphere | infinity | B | | | | |
| S1 | L1 | asphere | 5.409 | 1.636 | plastic | 1.670 | 19.200 | -17.701 |
| S2 | | asphere | 3.271 | 1.653 | | | | |
| Aperture stop | STO | sphere | infinity | -1.051 | | | | |
| S3 | L2 | asphere | 4.240 | 1.827 | plastic | 1.544 | 56.000 | 9.897 |
| S4 | | asphere | 16.681 | 1.636 | | | | |
| S5 | L3 | asphere | -3.450 | 1.859 | plastic | 1.544 | 56.000 | 5914.844 |
| S6 | | asphere | -4.102 | 0.100 | | | | |
| S7 | L4 | asphere | 3.868 | 1.592 | plastic | 1.544 | 56.000 | 23.276 |
| S8 | | asphere | 4.752 | C | | | | |
| S9 | L5 | asphere | 12.278 | 1.554 | plastic | 1.535 | 55.800 | -134.861 |
| S10 | | asphere | 10.033 | 1.989 | | | | |
| S11 | optical filter IR | sphere | infinity | 0.210 | glass | 1.518 | 64.000 | |
| S12 | | sphere | infinity | 5.484 | | | | |

(continued)

| Third embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| | object side | sphere | infinity | A | | | | |
| IMG | imaging plane | sphere | infinity | 0.001 | | | | |
| Reference wavelength is 587 nm | | | | | | | | |

Table 3b

| | A(mm) | B(mm) | C(mm) | FNO | TTL(mm) | FOV(°) | ImgH(mm) | f(mm) |
|---|---|---|---|---|---|---|---|---|
| telephoto end (z1) | infinity | 3.105 | 1.566 | 1.900 | 31.200 | 31.900 | 4.100 | 14.500 |
| wide-angle end (z2) | 100.000 | 0.700 | 3.969 | 2.100 | 31.200 | 28.700 | 4.100 | 14.200 |

Table 3c shows the coefficients of the higher-order terms that can be used for each aspherical mirror surface in the third embodiment. Wherein each aspherical surface shape can be defined by the formula provided in the first embodiment.

Table 3c

| Third embodiment spherical coefficient | | | | | |
|---|---|---|---|---|---|
| Surface numeral | K | A4 | A6 | A8 | A10 |
| S1 | -1.00973E+00 | -1.03549E-03 | -2.65463E-05 | 1.88839E-06 | -7.75697E-08 |
| S2 | -1.14182E+00 | -3.82615E-03 | 2.26553E-04 | -1.19342E-05 | -1.89197E-07 |
| S3 | -1.59750E+00 | -3.72329E-03 | 3.80958E-04 | -5.23379E-06 | -1.76100E-06 |
| S4 | 3.90830E-01 | -4.42864E-03 | 8.01837E-04 | -4.64274E-05 | 1.04500E-06 |
| S5 | -1.99134E+00 | 7.91729E-03 | -7.43940E-04 | 6.46731E-05 | -3.95940E-06 |
| S6 | -6.73000E-01 | 4.30550E-03 | -2.92133E-04 | 1.18496E-05 | 1.85207E-07 |
| S7 | -1.53939E+00 | -4.65629E-03 | 1.53028E-05 | 9.15311E-06 | -4.35258E-07 |
| S8 | -1.96022E-18 | -5.43106E-03 | 6.18833E-06 | 3.87665E-06 | -2.67526E-07 |
| S9 | -1.82406E+01 | 1.31454E-04 | 2.37619E-05 | -4.43376E-07 | 0.00000E+00 |
| S10 | -1.12687E+00 | -4.40850E-05 | 2.27538E-04 | -3.76857E-05 | 4.02166E-06 |
| Surface numeral | A12 | A14 | A16 | A18 | A20 |
| S1 | 0.00000E+00 | 0.00000E+00 | 0.00000E+00 | 0.00000E+00 | 0.00000E+00 |
| S2 | 1.84380E-08 | 0.00000E+00 | 0.00000E+00 | 0.00000E+00 | 0.00000E+00 |
| S3 | 7.28798E-08 | 0.00000E+00 | 0.00000E+00 | 0.00000E+00 | 0.00000E+00 |
| S4 | -8.72929E-09 | 0.00000E+00 | 0.00000E+00 | 0.00000E+00 | 0.00000E+00 |
| S5 | 1.77623E-07 | -4.85477E-09 | 0.00000E+00 | 0.00000E+00 | 0.00000E+00 |
| S6 | -2.19178E-08 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |

(continued)

| Surface numeral | A12 | A14 | A16 | A18 | A20 |
|---|---|---|---|---|---|
| S10 | -2.20194E-07 | 4.76183E-09 | 0.00000E+00 | 0.00000E+00 | 0.00000E+00 |

FIG. 3B is an aberration diagram of the optical system of the third embodiment when the movable lens group is located at the telephoto end. The longitudinal spherical aberration curve shows the deviation of the focal point of light at different wavelengths after passing through each lens of the optical system. T of the astigmatism diagram represents the curvature of the imaging plane IMG in the tangential direction, and S represents the curvature of the imaging plane IMG in the sagittal direction. The distortion curve indicates the distortion value corresponding to different field of view. Referring to aberration diagrams of FIG. 3B, the longitudinal spherical aberration, the curvature of field, and the distortion of the optical system of the third embodiment have been controlled, thus the optical system of this embodiment has good imaging quality.

Fourth embodiment

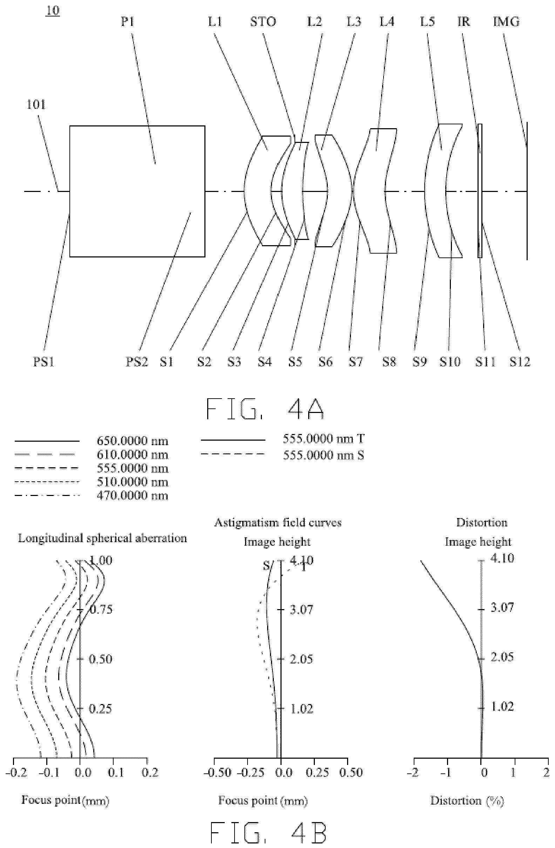

Referring to FIG. 4A to FIG. 4B, the difference between a structure of the fourth embodiment and a structure of the first embodiment is that the refractive power of the third lens L3 is positive, and the refractive power of the fifth lens L5 is negative. The other of the structure of the fourth embodiment is referred to the other of the structure of first embodiment.

Table 4a

| Fourth embodiment | | | | | | | | |
|---|---|---|---|---|---|---|---|---|
| Surface numeral | Lens numeral | Surface type | Y radius (mm) | Thickness (mm) | Material | refractive index | Abbe number | Focal length (mm) |
| | object side | sphere | infinity | A | | | | |
| SP1 | P1 | sphere | infinity | 8.000 | glass | 1.807 | 46.600 | |
| SP2 | | sphere | infinity | B | | | | |
| S1 | L1 | asphere | 4.390 | 1.592 | plastic | 1.670 | 19.200 | -25.093 |
| S2 | | asphere | 2.978 | 1.397 | | | | |
| Aperture stop | STO | sphere | infinity | -0.784 | | | | |
| S3 | L2 | asphere | 4.200 | 1.250 | plastic | 1.544 | 56.000 | 11.378 |
| S4 | | asphere | 11.600 | 1.478 | | | | |
| S5 | L3 | asphere | -3.560 | 1.436 | plastic | 1.544 | 56.000 | 1332.924 |
| S6 | | asphere | -4.048 | 0.100 | | | | |
| S7 | L4 | asphere | 3.798 | 1.878 | plastic | 1.544 | 56.000 | 20.155 |
| S8 | | asphere | 4.787 | C | | | | |
| S9 | L5 | asphere | 9.529 | 1.269 | plastic | 1.535 | 55.800 | -40916.363 |
| S10 | | asphere | 9.082 | 1.916 | | | | |
| S11 | optical filter IR | sphere | infinity | 0.210 | glass | 1.518 | 64.000 | |
| S12 | | sphere | infinity | 2.683 | | | | |
| IMG | imaging plane | sphere | infinity | 0.001 | | | | |
| Reference wavelength is 587 nm | | | | | | | | |

Table 4b

| | A(mm) | B(mm) | C(mm) | FNO | TTL(mm) | FOV(°) | ImgH(mm) | f(mm) |
|---|---|---|---|---|---|---|---|---|
| telephoto end (z1) | infinity | 2.335 | 2.331 | 1.900 | 27.100 | 37.300 | 4.100 | 12.200 |
| wide-angle end (z2) | 100.000 | 0.700 | 3.969 | 2.100 | 27.100 | 33.900 | 4.100 | 12.200 |

Table 4c shows the coefficients of the higher-order terms that can be used for each aspherical mirror surface in the fourth embodiment. Wherein each aspherical surface shape can be defined by the formula provided in the first embodiment.

Table 4c

| Fourth embodiment spherical coefficient | | | | |
|---|---|---|---|---|
| Surface numeral | K | A4 | A6 | A8 | A10 |
| S1 | -1.03200E+00 | -5.80303E-04 | -1.11106E-04 | 8.62877E-06 | -3.26648E-07 |
| S2 | -1.13137E+00 | -2.77544E-03 | -9.54540E-05 | 3.10564E-05 | -3.07300E-06 |
| S3 | -1.62397E+00 | -4.57433E-03 | 6.23304E-04 | -3.89696E-05 | 6.98258E-07 |
| S4 | -1.71362E+00 | -5.49444E-03 | 1.50235E-03 | -1.85932E-04 | 1.22476E-05 |
| S5 | -2.03086E+00 | 4.98148E-03 | 1.05743E-03 | -3.10626E-04 | 3.02005E-05 |
| S6 | -7.00940E-01 | 1.12048E-03 | 1.07001E-03 | -1.99391E-04 | 1.43883E-05 |
| S7 | -1.40521E+00 | -4.66873E-03 | 2.01628E-04 | -1.26337E-05 | 3.02811E-07 |
| S8 | -1.09100E-02 | -6.83841E-03 | 2.44325E-04 | -1.54615E-05 | 2.98466E-07 |
| S9 | -2.22353E+00 | 8.25353E-05 | 1.43870E-05 | -4.09296E-07 | 0.00000E+00 |
| S10 | -1.12035E+00 | 1.69433E-03 | -3.64613E-04 | 5.18646E-05 | -3.71456E-06 |
| Surface numeral | A12 | A14 | A16 | A18 | A20 |
| S1 | 0.00000E+00 | 0.00000E+00 | 0.00000E+00 | 0.00000E+00 | 0.00000E+00 |
| S2 | 9.77203E-08 | 0.00000E+00 | 0.00000E+00 | 0.00000E+00 | 0.00000E+00 |
| S3 | 1.48521E-09 | 0.00000E+00 | 0.00000E+00 | 0.00000E+00 | 0.00000E+00 |
| S4 | -3.28419E-07 | 0.00000E+00 | 0.00000E+00 | 0.00000E+00 | 0.00000E+00 |
| S5 | -1.13345E-06 | 9.72480E-09 | 0.00000E+00 | 0.00000E+00 | 0.00000E+00 |
| S6 | -3.69985E-07 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 1.30524E-07 | -1.78756E-09 | 0.00000E+00 | 0.00000E+00 | 0.00000E+00 |

FIG. 4B is an aberration diagram of the optical system of the fourth embodiment when the movable lens group is located at the telephoto end. The longitudinal spherical aberration curve shows the deviation of the focal point of light at different wavelengths after passing through each lens of the optical system. T of the astigmatism diagram represents the curvature of the imaging plane IMG in the tangential direction, and S represents the curvature of the imaging plane IMG in the sagittal direction. The distortion curve indicates the distortion value corresponding to different field of view. Referring to aberration diagrams of FIG. 4B, the longitudinal spherical aberration, the curvature of field, and the distortion of the optical system of the fourth embodiment have been controlled, thus the optical system of this embodiment has good imaging quality.

Fifth embodiment

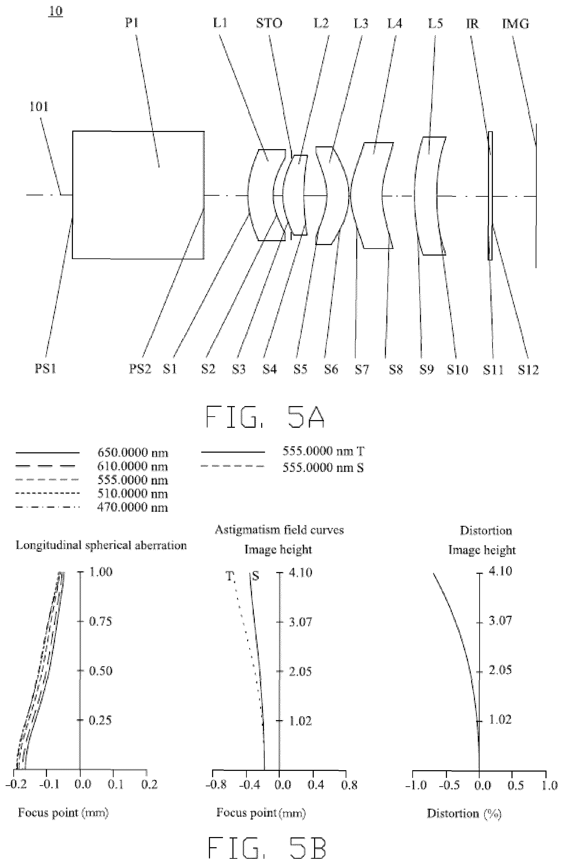

Referring to FIG. 5A to FIG. 5B, the difference between a structure of the fifth embodiment and a structure of the first embodiment is that the refractive power of the third lens L3 is positive. The other of the structure of the fifth embodiment is referred to the other of the structure of first embodiment.

Table 5a

| Surface numeral | Lens numeral | Surface tvpe | Y radius (mm) | Thickness (mm) | Material | refractive index | Abbe number | Focal length (mm) |
|---|---|---|---|---|---|---|---|---|
| Fifth embodiment | | | | | | | | |
| | object side | sphere | infinity | A | | | | |
| SP1 | P1 | sphere | infinity | 8.000 | glass | 1.807 | 46.600 | |
| SP2 | | sphere | infinity | B | | | | |
| S1 | L1 | asphere | 5.304 | 1.541 | plastic | 1.670 | 19.200 | -16.634 |
| S2 | | asphere | 3.183 | 1.144 | | | | |
| Aperture stop | STO | sphere | infinity | -0.551 | | | | |
| S3 | L2 | asphere | 3.716 | 1.286 | plastic | 1.544 | 56.000 | 9.487 |
| S4 | | asphere | 11.533 | 1.407 | | | | |
| S5 | L3 | asphere | -3.416 | 1.351 | plastic | 1.544 | 56.000 | 230.348 |
| S6 | | asphere | -3.790 | 0.100 | | | | |
| S7 | L4 | asphere | 4.005 | 1.919 | plastic | 1.544 | 56.000 | 23.775 |
| S8 | | asphere | 4.812 | C | | | | |
| S9 | L5 | asphere | 13.696 | 1.360 | plastic | 1.535 | 55.800 | 551.603 |
| S10 | | asphere | 13.863 | 3.185 | | | | |
| S11 | optical filter IR | sphere | infinity | 0.210 | glass | 1.518 | 64.000 | |
| S12 | | sphere | infinity | 2.680 | | | | |
| IMG | imaging plane | sphere | infinity | 0.001 | | | | |
| Reference wavelength is 587 nm | | | | | | | | |

Table 5b

| | A(mm) | B(mm) | C(mm) | FNO | TTL(mm) | FOV(°) | ImgH(mm) | f(mm) |
|---|---|---|---|---|---|---|---|---|
| telephoto end (z1) | infinity | 2.692 | 1.975 | 2.400 | 28.300 | 36.000 | 4.100 | 12.600 |
| wide-angle end (z2) | 100.000 | 0.700 | 3.969 | 2.800 | 28.300 | 32.300 | 4.100 | 12.700 |

Table 5c shows the coefficients of the higher-order terms that can be used for each aspherical mirror surface in the fifth embodiment. Wherein each aspherical surface shape can be defined by the formula provided in the first embodiment.

Table 5c

| Surface numeral | K | A4 | A6 | A8 | A10 |
|---|---|---|---|---|---|
| Fifth embodiment spherical coefficient | | | | | |
| S1 | -1.03783E+00 | -7.09899E-04 | -3.48782E-05 | -1.82401E-06 | 6.50390E-08 |
| S2 | -1.13362E+00 | -4.24100E-03 | 6.20449E-04 | -9.65711E-05 | 6.81118E-06 |
| S3 | -1.62287E+00 | -5.59353E-03 | 1.16536E-03 | -1.37476E-04 | 8.07017E-06 |

(continued)

| Fifth embodiment spherical coefficient | | | | |
|---|---|---|---|---|
| Surface numeral | K | A4 | A6 | A8 | A10 |
| S4 | 6.34190E-01 | -5.08749E-03 | 1.20496E-03 | -1.26242E-04 | 7.76988E-06 |
| S5 | -2.01473E+00 | 7.28437E-03 | -5.35550E-04 | 5.48358E-05 | -7.32922E-06 |
| S6 | -6.69021E-01 | 3.71051E-03 | -2.64250E-05 | -1.66039E-05 | 9.95061E-07 |
| S7 | -1.44272E+00 | -4.95637E-03 | 1.82613E-04 | -5.73151E-06 | -1.25898E-08 |
| S8 | -7.52775E-04 | -6.51421E-03 | 2.29608E-04 | -1.11880E-05 | 8.98624E-08 |
| S9 | -1.35174E+01 | 1.19821E-03 | -5.20683E-05 | 1.45201E-06 | 0.00000E+00 |
| S10 | 2.41509E+00 | 6.25681E-04 | -2.11824E-05 | 8.02936E-07 | -1.91071E-07 |
| Surface numeral | A12 | A14 | A16 | A18 | A20 |
| S1 | 0.00000E+00 | 0.00000E+00 | 0.00000E+00 | 0.00000E+00 | 0.00000E+00 |
| S2 | -1.82914E-07 | 0.00000E+00 | 0.00000E+00 | 0.00000E+00 | 0.00000E+00 |
| S3 | -1.92925E-07 | 0.00000E+00 | 0.00000E+00 | 0.00000E+00 | 0.00000E+00 |
| S4 | -2.18040E-07 | 0.00000E+00 | 0.00000E+00 | 0.00000E+00 | 0.00000E+00 |
| S5 | 6.26243E-07 | -2.03601E-08 | 0.00000E+00 | 0.00000E+00 | 0.00000E+00 |
| S6 | -1.82402E-08 | 0.00000E+00 | 0.00000E+00 | 0.00000E+00 | 0.00000E+00 |
| S7 | 0.00000E+00 | 0.00000E+00 | 0.00000E+00 | 0.00000E+00 | 0.00000E+00 |
| S8 | 0.00000E+00 | 0.00000E+00 | 0.00000E+00 | 0.00000E+00 | 0.00000E+00 |
| S9 | 0.00000E+00 | 0.00000E+00 | 0.00000E+00 | 0.00000E+00 | 0.00000E+00 |
| S10 | 1.80609E-08 | -4.51304E-10 | 0.00000E+00 | 0.00000E+00 | 0.00000E+00 |

FIG. 5B is an aberration diagram of the optical system of the fifth embodiment when the movable lens group is located at the telephoto end. The longitudinal spherical aberration curve shows the deviation of the focal point of light at different wavelengths after passing through each lens of the optical system. T of the astigmatism diagram represents the curvature of the imaging plane IMG in the tangential direction, and S represents the curvature of the imaging plane IMG in the sagittal direction. The distortion curve indicates the distortion value corresponding to different field of view. Referring to aberration diagrams of FIG. 5B, the longitudinal spherical aberration, the curvature of field, and the distortion of the optical system of the fifth embodiment have been controlled, thus the optical system of this embodiment has good imaging quality.

Table 6 shows the relationship values among some parameters of the optical system 10 of the first to fifth embodiments.

Table 6

| Formula | first embodiment | second embodiment | third embodiment | fourth embodiment | fifth embodiment |
|---|---|---|---|---|---|
| f1/f_z1 | -1.273 | -0.994 | -1.221 | -2.057 | -1.320 |
| f2/f_z1 | 0.668 | 0.499 | 0.683 | 0.933 | 0.753 |
| f3/f_z1 | -3.698 | -2.677 | 407.920 | 109.256 | 18.282 |
| f4/f_z1 | 1.490 | 0.952 | 1.605 | 1.652 | 1.887 |
| f5/f_z1 | 10.361 | -1.283 | -9.301 | -3353.800 | 43.778 |
| R1/f_z1 | 0.370 | 0.278 | 0.373 | 0.360 | 0.421 |
| R2/f_z1 | 0.227 | 0.171 | 0.226 | 0.244 | 0.253 |
| R3/f_z1 | 0.307 | 0.243 | 0.292 | 0.344 | 0.295 |
| R4/f_z1 | 1.673 | 1.831 | 1.150 | 0.951 | 0.915 |
| R5/f_z1 | -0.234 | -0.173 | -0.238 | -0.292 | -0.271 |

(continued)

| Formula | first embodiment | second embodiment | third embodiment | fourth embodiment | fifth embodiment |
|---|---|---|---|---|---|
| R6/f_z1 | -0.303 | -0.224 | -0.283 | -0.332 | -0.301 |
| R7/f_z1 | 0.263 | 0.195 | 0.267 | 0.311 | 0.318 |
| R8/f_z1 | 0.330 | 0.258 | 0.328 | 0.392 | 0.382 |
| R9/f_z1 | 0.666 | 1.986 | 0.847 | 0.781 | 1.087 |
| R10/f_z1 | 0.713 | 0.504 | 0.692 | 0.744 | 1.100 |
| f_z1/f_z2 | 0.983 | 1.116 | 1.021 | 1.000 | 0.992 |
| f1234/f_z1 | 1.123 | 0.744 | 0.987 | 1.053 | 1.051 |
| f5/f1234 | 9.224 | -1.723 | -9.424 | -3186.108 | 41.670 |
| FOV_z1/FOV_z2 | 1.146 | 1.102 | 1.111 | 1.100 | 1.115 |
| FNO_z1/FNO_z2 | 1.167 | 1.167 | 1.105 | 1.105 | 1.167 |
| TTL/ImgH | 7.390 | 7.951 | 7.610 | 6.610 | 6.902 |
| SD10/SD1 | 0.972 | 0.859 | 1.047 | 1.176 | 1.279 |
| SDmax/ImgH | 0.982 | 0.937 | 1.030 | 0.980 | 0.891 |
| GL/CT5 | 5.312 | 6.597 | 5.952 | 6.577 | 6.027 |
| TDmax/ImgH | 3.389 | 3.671 | 3.604 | 3.314 | 3.299 |
| TDmin/ImgH | 2.704 | 3.156 | 3.018 | 2.914 | 2.813 |
| TDmax/TDmin | 1.253 | 1.163 | 1.194 | 1.137 | 1.173 |
| TD_z1/f_z1 | 0.781 | 0.676 | 0.853 | 0.979 | 0.915 |
| TD_z2/f_z2 | 0.961 | 0.878 | 1.041 | 1.114 | 1.065 |
| AT23/AT12 | 2.977 | 2.161 | 2.717 | 2.410 | 2.373 |
| Cz2/Cz1 | 3.413 | 2.140 | 2.534 | 1.702 | 2.010 |
| CT1/CT2 | 1.000 | 0.698 | 0.896 | 1.273 | 1.198 |
| CT3/CT4 | 0.849 | 0.734 | 1.168 | 0.765 | 0.704 |
| CT5/CT4 | 0.983 | 0.793 | 0.976 | 0.676 | 0.709 |
| CT2/CT3 | 1.177 | 1.803 | 0.983 | 0.870 | 0.952 |

The optical systems in the above embodiments have continuous internal focusing function and the characteristic of miniaturization.

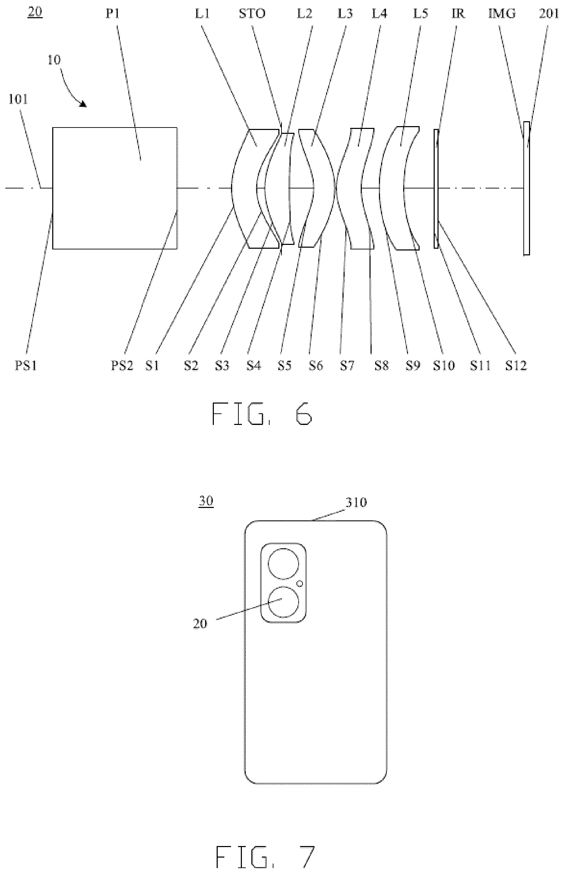

Referring to FIG. 6, an embodiment of the present application further provides a lens module 20. The lens module 20 includes the optical system of any one of the above embodiments and a photosensitive chip. The photosensitive chip is disposed on the image side of the optical system, and the photosensitive chip and the optical system can be fixed by a bracket. The photosensitive chip can be a CCD sensor (Charge Coupled Device) or a CMOS sensor (Complementary Metal Oxide Semiconductor). In general, during assembly, the imaging plane IMG of the optical system overlaps with a photosensitive surface of the photosensitive chip. By adopting the above optical system, the lens module 20 can have the continuous internal focusing function and the characteristic of miniaturization.

Referring to FIG. 7, an embodiment of the present application further provides an electronic device 30. The electronic device 30 includes a housing 310 and the lens module 20 of the above embodiment. The lens module 20 is mounted on the housing 310. The housing 310 may be a display screen, a circuit board, a middle frame, a back cover, or other components. The electronic device 30 may be, but is not limited to, a smart phone, a smart watch, smart glasses, an e-book reader, a tablet computer, a biometric device (such as a fingerprint recognition device or a pupil recognition device, etc.), a PDA (Personal Digital Assistant), or the like. Since the lens module 20 can have the characteristic of miniaturization while having the continuous internal focusing function, when the lens module 20 is used, the electronic device 30 can provide a smaller space for assembling the lens module 20, thereby reducing a thickness of the device and making the shooting speed and focusing speed faster.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1. An optical system (10) **characterized in that**, the optical system (10) comprises five lenses having refractive power, from an object side to an image side along an optical axis (101) of the optical system (10), the five lenses sequentially comprising a first lens (L1), a second lens (L2), a third lens (L3), a fourth lens (L4), and a fifth lens (L5);

   wherein the first lens (L1) has negative refractive power, an object side surface (S1) of the first lens (L1) is convex near the optical axis (101), and an image side surface (S2) of the first lens (L1) is concave near the optical axis (101);
   the second lens (L2) has positive refractive power, an object side surface (S3) of the second lens (L2) is convex near the optical axis (101), and an image side surface (S4) of the second lens (L2) is concave near the optical axis (101);
   the third lens (L3) has refractive power, an object side surface (S5) of the third lens (L3) is concave near the optical axis (101), and an image side surface (S6) of the third lens (L3) is convex near the optical axis (101);
   the fourth lens (L4) has positive and negative refractive power, an object side surface (S7) of the fourth lens (L4) is convex near the optical axis (101), and an image side surface (S8) of the fourth lens (L4) is concave near the optical axis (101);
   the fifth lens (L5) has refractive power, an object side surface (S9) of the fifth lens (L5) is convex near the optical axis (101), and an image side surface (S10) of the fifth lens (L5) is concave near the optical axis (101);
   the optical system (10) comprises a movable lens group and a fixed lens group, wherein the movable lens group comprises the first lens (L1), the second lens (L2), the third lens (L3), and the fourth lens (L4), and the fixed lens group comprises the fifth lens (L5), the fixed lens group is fixed relative to an imaging plane (IMG) of the optical system (10), and the movable lens group is movable along the optical axis (101) between a wide-angle end and a telephoto end for focusing;
   the optical system (10) satisfies following condition:

   $$15° < FOV < 45°;$$

   wherein, FOV is a maximum field of view of the optical system (10).

2. The optical system (10) of claim 1, **characterized in that**, the optical system (10) further satisfies following condition:

   $$1.4 < FNO < 3.2;$$

   wherein, FNO is a F-number of the optical system (10).

3. The optical system (10) of claim 1, **characterized in that**, the optical system (10) further satisfies following condition:

   $$2.5 < TDmax/ImgH < 4.5;$$

   wherein, TDmax is a maximum distance from the object side surface (S1) of the first lens (L1) to the image side surface (S10) of the fifth lens (L5) along the optical axis (101), and ImgH is a half of an image height corresponding to the maximum field of view of the optical system (10).

4. The optical system (10) of claim 1, **characterized in that**, the optical system (10) further comprises a prism (P1) disposed on an object side of the first lens (L1) and is fixed relative to the imaging plane (IMG) of the optical system (10), the prism (P1) comprising an incident surface (PS1) and an exit surface (PS2), wherein the incident surface (PS1) transmits light into the prism (P1), and light emitted from the exit surface (PS2) is incident to the first lens (L1), the optical system (10) further satisfies following conditions:

$$5 < TTL/ImgH < 9;$$

wherein, TTL is a distance from the incident surface (PS1) to the imaging plane (IMG) along the optical axis (101), and ImgH is a half of an image height corresponding to the maximum field of view of the optical system (10).

5. The optical system (10) of claim 1, **characterized in that**, the optical system (10) further satisfies at least one of following conditions:

$$0.7 < f\_z1/f\_z2 < 1.4,$$

$$1.05 < FOV\_z1/FOV\_z2 < 1.4,$$

$$1 < FNO\_z1/FNO\_z2 < 1.4,$$

$$0.5 < f1234/f\_z1 < 1.4,$$

and

$$1 < |f5|/f1234;$$

wherein, f_z1 is a focal length of the optical system (10) when the movable lens group is located at the telephoto end, f_z2 is a focal length of the optical system (10) when the movable lens group is located at the wide-angle end, FOV_z1 is the maximum field of view of the optical system (10) when the movable lens group is located at the telephoto end, FOV_z2 is the maximum field of view of the optical system (10) when the movable lens group is located at the wide-angle end, FNO_z1 is the F-number of the optical system (10) when the movable lens group is located at the telephoto end, and FNO_z2 is the F-number of the optical system (10) when the movable lens group is located at the wide-angle end, f1234 is a combined focal length of the first lens (L1), the second lens (L2), the third lens (L3), and the fourth lens (L4), and f5 is the focal length of the fifth lens (L5).

6. The optical system (10) of claim 1, **characterized in that**, the optical system (10) further satisfies following condition:

$$2 < TDmin/ImgH < 4;$$

wherein, TDmin is a minimum distance from the object side surface (S1) of the first lens (L1) to the image side surface (S10) of the fifth lens (L5) along the optical axis (101), and ImgH is a half of an image height corresponding to the maximum field of view of the optical system (10).

7. The optical system (10) of claim 1, **characterized in that**, the optical system (10) further satisfies following condition:

$$0.7 < SD10/SD1 < 1.4;$$

wherein, SD1 is an effective aperture radius of the object side surface (S1) of the first lens (L1), and SD10 is an effective aperture radius of the image side surface (S10) of the fifth lens (L5).

8. The optical system (10) of claim 1, **characterized in that**, the optical system (10) further satisfies following condition:

$$0.75 < SDmax/ImgH < 1.2;$$

wherein, SDmax is a maximum value of effective aperture radiuses of object side surfaces or image side surfaces of the first to fifth lens (L5)es, and ImgH is a half of an image height corresponding to the maximum field of view of the optical system (10).

9. The optical system (10) of claim 1, **characterized in that**, the optical system (10) further satisfies following condition:

$$1<TDmax/TDmin<1.5;$$

wherein, TDmin is a minimum distance from the object side surface (S1) of the first lens (L1) to the image side surface (S10) of the fifth lens (L5) along the optical axis (101), and TDmax is a maximum distance from the object side surface (S1) of the first lens (L1) to the image side surface (S10) of the fifth lens (L5) along the optical axis (101).

10. The optical system (10) of claim 1, **characterized in that**, the optical system (10) further satisfies at least one of following conditions:

$$0.6<TD\_z1/f\_z1<1.05,$$

$$0.75<TD\_z2/f\_z2<1.2,$$

$$1.7<AT23/AT12<3.5,$$

and

$$1<Cz2/Cz1<5;$$

wherein, TD_z1 is a distance from the object side surface (S1) of the first lens (L1) to the image side surface (S10) of the fifth lens (L5) along the optical axis (101) when the movable lens group is located at the telephoto end, TD_z2 is a distance from the object side surface (S 1) of the first lens (L1) to the image side surface (S10) of the fifth lens (L5) along the optical axis (101) when the movable lens group is located at the wide-angle end, f_z1 is a focal length of the optical system (10) when the movable lens group is located at the telephoto end, f_z2 is a focal length of the optical system (10) when the movable lens group is located at the wide-angle end, AT12 is a distance from the first lens (L1) to the second lens (L2) along the optical axis (101), AT23 is a distance from the second lens (L2) to the third lens (L3) along the optical axis (101), Cz1 is a distance from the fourth lens (L4) to the fifth lens (L5) along the optical axis (101) when the movable lens group is located at the telephoto end, and Cz2 is a distance from the fourth lens (L4) to the fifth lens (L5) along the optical axis (101) when the movable lens group is located at the wide-angle end.

11. The optical system (10) of claim 1, **characterized in that**, the optical system (10) further satisfies at least one of following conditions:

$$4<GL/CT5<8,$$

$$0.5<CT1/CT2<1.5,$$

$$0.5<CT3/CT4<1.4,$$

$$0.5<CT5/CT4<1.3,$$

and

$$0.7<CT2/CT3<2.3;$$

wherein, CT1 is a thickness of the first lens (L1) on the optical axis (101), CT2 is a thickness of the second lens (L2) on the optical axis (101), CT3 is a thickness of the third lens (L3) on the optical axis (101), CT4 is a thickness of the fourth lens (L4) on the optical axis (101), CT5 is a thickness of the fifth lens (L5) on the optical axis (101), and GL is a distance from the object side surface (S1) of the first lens (L1) to the image side surface (S8) of the fourth lens (L4) along the optical axis (101).

12. The optical system (10) of claim 1, **characterized in that**, the optical system (10) further satisfies at least one of following conditions:

$$-2.5 < F1/f\_z1 < -0.8,$$

$$0.4 < f2/f\_z1 < 1.1,$$

$$2 < |f3|/f\_z1,$$

$$0.7 < f4/f\_z1 < 2.2,$$

and

$$1 < |F5|/f\_z1;$$

wherein, f1 is a focal length of the first lens (L1), f2 is a focal length of the second lens (L2), f3 is a focal length of the third lens (L3), f4 is a focal length of the fourth lens (L4), f5 is a focal length of the fifth lens (L5), and f_z1 is a focal length of the optical system (10) when the movable lens group is located at the telephoto end.

13. The optical system (10) of claim 1, **characterized in that**, the optical system (10) further satisfies at least one of following conditions:

$$0.2 < R1/f\_z1 < 0.7,$$

$$0.1 < R2/f\_z1 < 0.4,$$

$$0.15 < R3/f\_z1 < 0.5,$$

$$0.7 < R4/f\_z1 < 2.2,$$

$$-0.5 < R5/f\_z1 < -0.1,$$

$$-0.5 < R6/f\_z1 < -0.1,$$

$$0.1 < R7/f\_z1 < 0.5,$$

$$0.15 < R8/f\_z1 < 0.6,$$

$$0.5 < R9/f\_z1 < 2.5,$$

and

$$0.4 < R10/f\_z1 < 1.4;$$

wherein, R1 is a curvature radius of the object side surface (S1) of the first lens (L1) at the optical axis (101), R2 is a curvature radius of the image side surface (S2) of the first lens (L1) at the optical axis (101), R3 is a curvature radius of the object side surface (S3) of the second lens (L2) at the optical axis (101), R4 is a curvature radius of the image side surface (S4) of the second lens (L2) at the optical axis (101), R5 is a curvature radius of the object side surface (S5) of the third lens (L3) at the optical axis (101), R6 is a curvature radius of the image side surface (S6) of the third lens (L3) at the optical axis (101), R7 is a curvature radius of the object side surface (S7) of the fourth lens (L4) at the optical axis (101), R8 is a curvature radius of the image side surface (S8) of the fourth lens (L4) at the optical axis (101), R9 is a curvature radius of the object side surface (S9) of the fifth lens (L5) at the optical axis (101), R10 is a curvature radius of the image side surface (S10) of the fifth lens (L5) at the optical axis (101), and f_z1 is a focal length of the optical system (10) when the movable lens group is located at the telephoto end.

**14.** A lens module, **characterized in that**, the camera module comprises the optical system (10) of any one of claims 1 to 13 and a photosensitive chip located on an image side of the optical system (10).

**15.** An electronic device, **characterized in that**, the electronic device comprises a housing and a camera module of claim 14, and the camera module is located in the housing.

FIG. 1A

FIG. 1B

10

P1    L1    STO    L2    L3    L4    L5    IR    IMG

101

PS1    PS2    S1    S2    S3    S4    S5    S6    S7    S8    S9    S10    S11    S12

FIG. 1C

| | 650.0000 nm | | 555.0000 nm T |
| --- | --- | --- | --- |
| | 610.0000 nm | | 555.0000 nm S |
| | 555.0000 nm | | |
| | 510.0000 nm | | |
| | 470.0000 nm | | |

Longitudinal spherical aberration

Astigmatism field curves
Image height

Distortion
Image height

1.00

0.75

0.50

0.25

-0.05 -0.025 0.0 0.025 0.05

Focus point (mm)

S  T

4.10

3.07

2.05

1.02

-0.08 -0.04 0.0 0.04 0.08

Focus point (mm)

4.10

3.07

2.05

1.02

-1.0 -0.5 0.0 0.5 1.0

Distortion (%)

FIG. 1D

FIG. 2A

FIG. 2B

FIG. 3A

FIG. 3B

10

P1    L1   STO    L2   L3   L4   L5   IR   IMG

101

PS1        PS2  S1   S2   S3   S4   S5   S6   S7   S8   S9  S10   S11   S12

# FIG. 4A

| | |
|---|---|
| ———— 650.0000 nm | ———— 555.0000 nm T |
| — — 610.0000 nm | - - - - 555.0000 nm S |
| - - - - 555.0000 nm | |
| ·········· 510.0000 nm | |
| -·-·-·- 470.0000 nm | |

Longitudinal spherical aberration

1.00

0.75

0.50

0.25

-0.2  -0.1   0.0   0.1   0.2

Focus point (mm)

Astigmatism field curves
Image height

S       T   4.10

3.07

2.05

1.02

-0.50 -0.25  0.0   0.25  0.50

Focus point (mm)

Distortion
Image height

4.10

3.07

2.05

1.02

-2    -1    0    1    2

Distortion (%)

# FIG. 4B

10

P1   L1   STO   L2   L3   L4   L5   IR   IMG

101

PS1        PS2  S1   S2   S3   S4   S5   S6   S7   S8   S9   S10   S11   S12

# FIG. 5A

| | |
|---|---|
| ——————— 650.0000 nm | ——————— 555.0000 nm T |
| — — — 610.0000 nm | — — — — — 555.0000 nm S |
| — — — — 555.0000 nm | |
| ------------ 510.0000 nm | |
| — · — · — ·· 470.0000 nm | |

Longitudinal spherical aberration

Astigmatism field curves
Image height

Distortion
Image height

1.00
0.75
0.50
0.25

T  S    4.10
3.07
2.05
1.02

4.10
3.07
2.05
1.02

-0.2  -0.1  0.0  0.1  0.2

-0.8  -0.4  0.0  0.4  0.8

-1.0  -0.5  0.0  0.5  1.0

Focus point (mm)

Focus point (mm)

Distortion (%)

# FIG. 5B

20   P1        L1   STO   L2   L3   L4   L5   IR   IMG   201

10

101

PS1        PS2   S1   S2   S3   S4   S5   S6   S7   S8   S9   S10   S11   S12

FIG. 6

30        310

20

FIG. 7